# EUROPÄISCHE PATENTSCHRIFT

(11) **EP 3 770 489 B1**
(45) Veröffentlichungstag und Bekanntmachung des Hinweises auf die Patenterteilung: **01.04.2026**
(21) Anmeldenummer: 20187616.6
(22) Anmeldetag: 24.07.2020
(51) Int. Cl.: F21S 8/08, F21V 23/04, G08G 1/005, F21W 131/103

(54) **ADAPTIVE STRASSENLEUCHTE MIT PERSONENDETEKTOR**
ADAPTIVE STREET LAMP WITH PERSON DETECTOR
LUMINAIRE D'ÉCLAIRAGE PUBLIC ADAPTATIF POURVU DE DÉTECTEUR DE PERSONNES

(30) Priorität: 26.07.2019 DE 102019120256
(43) Veröffentlichungstag der Anmeldung: 27.01.2021
(73) Patentinhaber: Siteco GmbH, 83301 Traunreut (DE)
(72) Erfinder: Wuppinger, Bernhard, 83362 Surberg (DE); Schroll, Katrin, 83301 Matzing (DE)
(74) Vertreter: Schmidt, Steffen

(56) Entgegenhaltungen:
- WO-A1-91/09253
- CN-A- 109 668 094
- CN-U- 204 372 791
- JP-A- 2005 056 689
- JP-A- 2007 280 735
- JP-A- 2009 032 260
- US-A1- 2012 026 733
- US-A1- 2016 150 614

## Beschreibung

### BESCHREIBUNG

Die vorliegende Erfindung betrifft eine Straßenleuchte, welche speziell zur Anordnung an einer Straße in der Nähe eines Fußgängerüberweges oder eines anderen Ortes mit erhöhtem Personenaufkommen, z.B. an einer der Straße angrenzenden Bushaltestelle vorgesehen ist.

Im Rahmen von Untersuchungen wurde festgestellt, dass Fußgänger im Straßenverkehr bei Dunkelheit viel häufiger betroffen sind als bei besseren Sichtverhältnissen. Ferner treten Fußgängerunfälle bei Dunkelheit nicht häufiger als am Tag auf, sondern die Unfallfolgen sind dann auch meist schwerer. Entgegen der Erwartungen treten auch bei Lichtsignalanlagen mehr Unfälle bei Dunkelheit auf.

Als unfallerhöhender Faktor in den letzten Jahren wurde auch die stetig steigende Lichtstärke der Autoscheinwerfer identifiziert, die zu einer Blendung der entgegenkommenden Fahrzeuge und dadurch zur Kontrastverminderung führen.

WO 91/09253 A1 offenbart ein Beleuchtungssystem US 2012/026733 A1 offenbart ein Beleuchtungssystem mit einem Personendetektor und zwei Lichtquellen, die in Abhängigkeit einer Personendetektion unterschiedlich angesteuert werden.

Aufgabe der vorliegenden Erfindung ist es, den Personenschutz für am Straßenverkehr beteiligte Fußgänger bei Dunkelheit zu erhöhen.

Gelöst wird die Aufgabe durch eine Straßenleuchte nach Anspruch 1.

Aus den Unfalluntersuchungen war bereits zu entnehmen, dass an Fußgängerüberwegen (auch als Zebrastreifen bezeichnet), die mit einer eigenen Beleuchtungsanlage ausgestattet sind, die Unfallzahlen mit Fußgängerbeteiligung geringer sind. Die erfindungsgemäße Straßenleuchte sieht daher vor, durch zusätzliche Beleuchtung gezielt die Sichtbarkeit von Personen, welche sich in der Nähe der Straße aufhalten, durch Veränderung der Spektraleigenschaften und/oder der Leuchtfrequenz der Straßenleuchte zu verbessern. Diese Leuchten können im Prinzip überall an einer Straße eingesetzt werden und sind vorzugsweise für Orte an der Straße vorgesehen, an denen ein erhöhtes Personenaufkommen zu erwarten ist. Beispielsweise in der Nähe von Fußgängerüberwegen oder Bushaltestellen. Die Leuchte verfügt über einen Sensor, der dafür eingerichtet ist, die Anwesenheit oder die Bewegung von Personen im Bereich der Leuchte zu detektieren. Abhängig von den erfassten Sensordaten wird die Straßenleuchte angesteuert, um die Spektralfarbe zu ändern oder eine Leuchtfrequenz zu ändern. Durch die Änderung der Spektralfarbe und/oder der Leuchtfrequenz wird die Person optisch für einen Fahrer hervorgehoben und leichter erkennbar. Von besonderem Vorteil ist dabei, dass die Lichtveränderungen erst eingeschaltet werden, wenn auch tatsächlich eine Person detektiert ist. Dadurch wird verhindert, dass sich Fahrzeugführer an bestimmte Leuchtmuster, welche dauerhaft an dem Ort vorhanden sind, gewöhnen. Die Veränderung der Lichtverhältnisse erhöht die Aufmerksamkeit des Fahrzeugführers, um dadurch Personen leichter in der Dunkelheit wahrzunehmen.

Erfindungsgemäß ist die Steuereinrichtung eingerichtet, ein Ultraviolett-Anteil des von der Straßenleuchte abgegebenen Lichts bei Detektion einer Person zu erhöhen. Das Ultraviolettlicht erzeugt Fluoreszenzlicht an Kleidungsstücken der detektierten Personen. Dadurch sind diese in der Nacht von einem Fahrer eines herannahenden Fahrzeugs besonders gut zu erkennen.

Gemäß einer bevorzugten Ausführungsform verursacht die Steuereinrichtung ein Blinken der Leuchte bei Detektion einer Person. Das Blinken hat den Vorteil, dass der Fahrer auf die mögliche Gefahrensituation durch die Personen aufmerksam gemacht wird. Lediglich das Beleuchten der Personen am Fahrbahnrand würde nicht die gleiche Aufmerksamkeit beim Fahrzeugführer hervorrufen, wie dies durch ein Blinklicht erfolgen kann.

Gemäß einer bevorzugten Ausführungsform ist die Steuereinrichtung eingerichtet, einen Rotanteil des von der Leuchte abgegebenen Lichts bei Detektion einer Person zu erhöhen. Auch die Farbe Rot wird als Warnsignal vom Fahrzeugführer wahrgenommen.

Gemäß einer bevorzugten Ausführungsform ist die Steuerung dazu eingerichtet, die Lichtfarbe der Straßenleuchte von einem warmweißen zu einem kaltweißen Farbton bei Detektion einer Person zu verändern. Durch den Farbwechsel erscheint z.B. der Fußgängerüberweg in gleißend hellem Licht, wodurch die Aufmerksamkeit des Fahrzeugführers erhöht wird.

Gemäß einer bevorzugten Ausführungsform ist die Steuereinrichtung dafür eingerichtet, die Lichtverteilung der Leuchte bei Detektion einer Person zu verändern, insbesondere eine breitere Lichtverteilung zu erzeugen. Neben der Veränderung der Lichtfarbe, wie in den vorhergehenden Ausführungsformen, kann auch die Lichtverteilung geändert werden. Beispielsweise kann der Randbereich eines Fußgängerüberwegs, an denen Personen zum Überqueren der Straße warten, erst beleuchtet werden, wenn sich tatsächlich Personen in diesem Bereich befinden. Das Umschalten der Lichtverteilung kann daher genutzt werden, um einen Bereich auf oder an der Straße auszuleuchten, der unter normalen Umständen, d.h. ohne anwesende Personen, nicht oder nur mit schwächerem Licht ausgeleuchtet würde.

Erfindungsgemäß ist die Straßenleuchte ferner mit einem Sensor verbunden, welcher dafür eingerichtet ist, sich der Leuchte nähernder Fahrzeuge zu detektieren, und die Veränderung der Spektralfarbe und/oder Lichtfrequenz bei einer detektierten Person nur aktiviert ist, wenn gleichzeitig ein sich annäherndes Auto detektiert wird. Dadurch kann Energie eingespart werden und die Lichtveränderung wird nicht als störend empfunden, wenn kein Fahrzeug in der Nähe ist.

Gemäß einer bevorzugten Ausführungsform umfasst der Sensor zum Detektieren der Anwesenheit und der Bewegung von Personen einen Kamerasensor, eine Infrarotkamera, einen PIR-Sensor, einen HF-Sensor und/oder einen Lidar-Sensor. Diese Sensortypen erlauben es in einfacher Weise, Personen und/oder Fahrzeuge in dem Gefahrenbereich zu erfassen.

Gemäß einer bevorzugten Ausführungsform ist die Steuerung dafür eingerichtet, einen Lichtstrom der Leuchte in einem Bereich, in welchem eine Person detektiert wird, zu erhöhen. In dieser Ausführungsform kann gezielt eine Person beleuchtet werden, um die Aufmerksamkeit des Fahrers auf diese Person zu lenken. Der Lichtstrom selbst kann gemäß einer Ausführungsform genutzt werden, um die geänderte Spektralfarbe und/oder die geänderte Leuchtfrequenz des Lichts der Straßenleuchte hervorzurufen.

Weitere Vorteile und Merkmale der vorliegenden Erfindung wird aus der nachfolgenden Beschreibung bevorzugter Ausführungsformen deutlich, die in Verbindung mit der Figur gegeben wird. In der Figur ist Folgendes dargestellt:

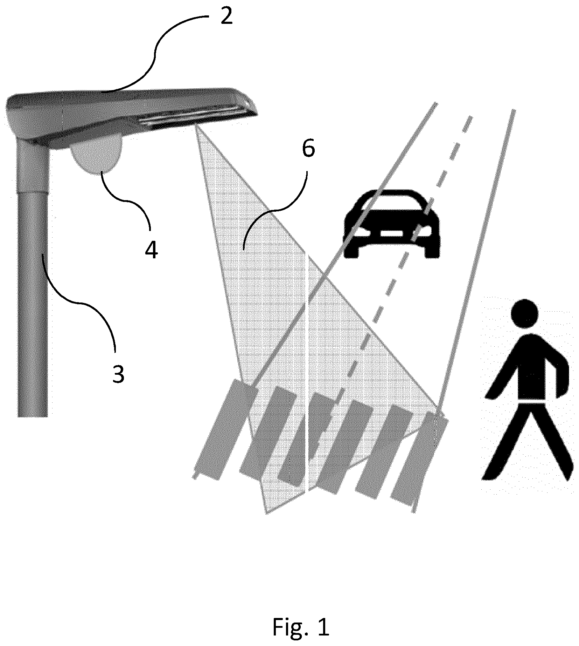

- Figur 1: zeigt schematisch eine Straßenleuchte einer Straße im Bereich eines Fußgängerüberweges mit einem herannahenden Auto.

Die vorliegende Erfindung kann in eine herkömmliche Straßenleuchte integriert werden. Wie in der Fig. 1 dargestellt, kann eine Straßenleuchte in der Nähe eines Fußgängerüberweges angeordnet und dafür eingerichtet sein, wenigstens mit einem Teil der Leuchtmittel den Bereich unmittelbar an dem Fußgängerüberweg auszuleuchten. Dies erfolgt jedoch nicht statisch für den gesamten Beleuchtungszeitraum, sondern dynamisch nur bei Erfassen einer Person in der Nähe des Fußgängerüberweges. Dazu ist in der Straßenleuchte 2 ein Sensor 4 integriert, welcher durch die erhöhte Position der Leuchte 2 auf einem Leuchtenmast 3 in einfacher Weise den Bereich des Fußgängerüberweges erfassen kann. Sobald eine Person detektiert wird und die Leuchte im Übrigen sich im eingeschalteten Zustand befindet, kann eine weitere Lichtabgabe 6 mit einer Spektralverteilung hervorgerufen werden, der sich von der Spektralverteilung der Leuchte, welche sie üblicherweise in dem eingeschalteten Zustand abgibt, unterscheidet. Erfindungsgemäß wird ein höherer UV-Lichtanteil abgegeben. Durch diesen Lichtanteil geben insbesondere weiße Kleidungsstücke ein Lumineszenzlicht ab, so dass für ein herannahendes Fahrzeug die Person an oder auf dem Fußgängerüberweg sehr gut erkennbar ist.

Ferner ist vorgesehen, dass in der Sensoreinheit 4 auch ein Bewegungsmelder vorgesehen ist, der herannahende Autos erkennt. Die Aktivierung der Beleuchtung mit der weiteren Spektralfarbe zur besseren Erkennung des Fußgängers kann auch aktiviert werden, wenn sich ein Fahrzeug nähert. In der erfindungsgemäßen Ausführungsform wird nur bei der Kombination, d.h. wenn sich ein Fußgänger in der Nähe des Überweges aufhält und ein Fahrzeug detektiert wird, die Zusatzbeleuchtung mit der weiteren Spektralverteilung eingeschaltet.

Gemäß einer alternativen Ausführungsform kann die Lichtabgabe 6 bei detektiertem Fußgänger und ggf. Fahrzeug auch in Form eines Blinklichts abgegeben werden.

### BEZUGSZEICHENLISTE

- 2: Straßenleuchte
- 3: Leuchtenmast
- 4: Sensor, insbesondere Bewegungssensor
- 6: Licht geänderter Spektralverteilung und/oder Blinklicht

## Patentansprüche

1. Straßenleuchte (2) zur Anordnung an der Straße in der Nähe eines Ortes mit erhöhtem Personenaufkommen, z.B. eines Fußgängerüberweges oder einer Bushaltestelle,
wobei die Straßenleuchte (2) mit einem Sensor (4) verbunden ist, der dazu eingerichtet ist, die Anwesenheit und/oder Bewegung von Personen zu detektieren, und
die Straßenleuchte (2) eine Steuereinrichtung aufweist, die dafür eingerichtet ist, eine Spektralfarbe und/oder eine Leuchtfrequenz eines von der Straßenleuchte abgegebenen Lichts (6) bei Detektion einer Person zu verändern, wobei die Steuereinrichtung eingerichtet ist, einen Ultraviolett-Anteil des von der Straßenleuchte abgegebenen Lichts (6) bei Detektion einer Person zu erhöhen,
wobei die Straßenleuchte (2) ferner mit einem Sensor verbunden ist, welcher dafür eingerichtet ist, sich der Leuchte nähernde Fahrzeuge zu detektieren, und die Veränderung der Spektralfarbe und/oder Leuchtfrequenz bei einer detektierten Person nur aktiviert ist, wenn gleichzeitig ein sich annäherndes Auto detektiert wird.

2. Straßenleuchte (2) nach Anspruch 1, wobei die Steuereinrichtung ein Blinken der Leuchte bei Detektion einer Person verursacht.

3. Straßenleuchte (2) nach einem der vorhergehenden Ansprüche, wobei die Steuereinrichtung eingerichtet ist, einen Rotanteil des von der Leuchte abgegebenen Lichts (6) bei Detektion einer Person zu erhöhen.

4. Straßenleuchte (2) nach einem der vorhergehenden Ansprüche, wobei die Steuerung dazu eingerichtet ist, die Lichtfarbe der Straßenleuchte von einem warmweißen zu einem kaltweißen Farbton bei Detektion einer Person zu verändern.

5. Straßenleuchte (2) nach einem der vorhergehenden Ansprüche, wobei die Steuereinrichtung dafür eingerichtet ist, die Lichtverteilung der Leuchte bei Detektion einer Person zu verändern, insbesondere eine breitere Lichtverteilung zu erzeugen.

6. Straßenleuchte (2) nach einem der vorhergehenden Ansprüche, wobei der Sensor zum Detektieren der Anwesenheit oder der Bewegung von Personen einen Kamerasensor, eine Infrarotkamera, einen PIR-Sensor, einen HF-Sensor und/oder einen Lidar-Sensor umfasst.

7. Straßenleuchte (2) nach einem der vorhergehenden Ansprüche, wobei die Steuerung dafür eingerichtet ist, einen Lichtstrom der Leuchte in einem Bereich, in welchem eine Person detektiert wird, zu erhöhen.

8. Straßenleuchte (2) nach Anspruch 7, wobei der erhöhte Lichtstrom die geänderte Spektralfarbe und/oder die geänderte Leuchtfrequenz des Lichts der Straßenleuchte hervorruft.

## Claims

1. Street light (2) for arrangement on the street in the vicinity of a place with an increased number of people, e.g. a pedestrian crossing or a bus stop,
wherein the street light (2) is connected to a sensor (4) which is configured to detect the presence and/or movement of people, and
the street light (2) has a control device which is configured to change a spectral colour and/or a light frequency of a light (6) emitted by the street light on detection of a person, wherein the control device is configured to increase an ultraviolet component of the light (6) emitted by the street light on detection of a person,
wherein the street light (2) is furthermore connected to a sensor which is configured to detect vehicles approaching the light, and the change in the spectral colour and/or light frequency is activated in the case of a detected person only if an approaching car is detected at the same time.

2. Street light (2) according to Claim 1, wherein the control device causes the light to flash on detection of a person.

3. Street light (2) according to one of the preceding claims, wherein the control device is configured to increase a red component of the light (6) emitted by the light on detection of a person.

4. Street light (2) according to one of the preceding claims, wherein the controller is configured to change the light colour of the street light from a warm-white to a cold-white colour tone on detection of a person.

5. Street light (2) according to one of the preceding claims, wherein the control device is configured to change the light distribution of the light on detection of a person, in particular to generate a wider light distribution.

6. Street light (2) according to one of the preceding claims, wherein the sensor for detecting the presence or the movement of people comprises a camera sensor, an infrared camera, a PIR sensor, an RF sensor and/or a lidar sensor.

7. Street light (2) according to one of the preceding claims, wherein the controller is configured to increase a luminous flux of the light in a region in which a person is detected.

8. Street light (2) according to Claim 7, wherein the increased luminous flux causes the changed spectral colour and/or the changed light frequency of the light of the street light.

## Revendications

1. Luminaire de rue (2) destinée à être disposée dans la rue à proximité d'un lieu de forte fréquentation, par exemple un passage pour piétons ou un arrêt de bus,
le luminaire de rue (2) étant relié à un capteur (4) qui est conçu pour détecter la présence et/ou le mouvement de personnes, et
le luminaire de rue (2) présentant un dispositif de commande qui est conçu pour modifier une couleur spectrale et/ou une fréquence d'éclairage d'une lumière (6) émise par le luminaire de rue lors de la détection d'une personne, le dispositif de commande étant conçu pour augmenter une proportion d'ultraviolet de la lumière (6) émise par le luminaire de rue lors de la détection d'une personne,
le luminaire de rue (2) étant en outre relié à un capteur qui est conçu pour détecter des véhicules s'approchant du luminaire, et la modification de la couleur spectrale et/ou de la fréquence d'éclairage n'étant activée pour une personne détectée que si une voiture s'approchant est détectée en même temps.

2. Luminaire de rue (2) selon la revendication 1, le dispositif de commande provoquant un clignotement du luminaire lors de la détection d'une personne.

3. Luminaire de rue (2) selon l'une quelconque des revendications précédentes, le dispositif de commande étant conçu pour augmenter une proportion de rouge de la lumière (6) émise par le luminaire lors de la détection d'une personne.

4. Luminaire de rue (2) selon l'une quelconque des revendications précédentes, la commande étant conçue pour modifier la couleur de lumière du luminaire de rue d'une teinte blanche chaude à une teinte blanche froide lors de la détection d'une personne.

5. Luminaire de rue (2) selon l'une quelconque des revendications précédentes, le dispositif de commande étant conçu pour modifier la répartition de lumière du luminaire lors de la détection d'une personne, en particulier pour générer une répartition de lumière plus large.

6. Luminaire de rue (2) selon l'une quelconque des revendications précédentes, le capteur pour détecter la présence ou le mouvement de personnes comprenant un capteur de caméra, une caméra infrarouge, un capteur PIR, un capteur HF et/ou un capteur Lidar.

7. Luminaire de rue (2) selon l'une quelconque des revendications précédentes, la commande étant conçue pour augmenter un flux lumineux du luminaire dans une zone dans laquelle une personne est détectée.

8. Luminaire de rue (2) selon la revendication 7, le flux lumineux augmenté causant la couleur spectrale modifiée et/ou la fréquence d'éclairage modifiée de la lumière du luminaire de rue.
